# EUROPÄISCHE PATENTANMELDUNG

(11) **EP 1 281 594 A2**
(43) Veröffentlichungstag der Anmeldung: **05.02.2003**
(21) Anmeldenummer: 02010632.4
(22) Anmeldetag: 11.05.2002
(51) Int. Cl.: B62B 7/06

(54) **Kinderwagen**

(30) Priorität: 01.08.2001 DE 20112583 U
(71) Anmelder: BRITAX-TEUTONIA KINDERWAGENFABRIK GmbH, D-32120 Hiddenhausen (DE)
(72) Erfinder: Maxisch, Peter, 33106 Paderborn (DE)
(74) Vertreter: Dantz, Jan Henning

(57) **Zusammenfassung**

Ein Kinderwagen (10), mit einem Laufräder (16) aufweisenden Fahrgestell, einem Schiebebügel (12), einer einstellbaren Fußstütze (14) sowie einer Rückenlehne (13) soll so gestaltet werden, dass er zum Leertransport platzsparend zusammengelegt werden kann, und dass insbesondere auch auf die aufwendigen Nietverbindungen verzichtete werden kann.

Erfindungsgemäß ist die Rückenlehne (13) und die Fußstütze (14) jeweils mittels eines Stelltriebes (18, 19) schwenkbar, und jeder Stelltrieb (18, 19) ist mit einem drehbaren Antriebselement (18a, 19a) ausgerüstet. Jeder Stelltrieb (18, 19) ist mit zwei achsparallelen Stäben (22, 23) ausgerüstet, die sich über die Breite der Rückenlehen e (13) und der Fußstütze (/14) erstrecken. Diese Stäbe sind durch miteinander in Eingriff stehende Ritzel (24, 25) gekoppelt. Jedes abtriebsseitige Ritzel (25) steht mit einem an der Rückenlehne (13) und an der Fußstütze (14) festgelegten Zahnsegment in Eingriff.

Der erfindungsgemäße Kinderwagen ist in allen üblichen Bauformen ausführbar.

## Beschreibung

Die Erfindung bezieht sich auf einen Kinderwagen mit einem die Laufräder aufweisenden Fahrgestell, einem Schiebebügel, einer einstellbaren Fußstütze sowie einer Rückenlehne.

Kinderwagen sind in vielen Ausführungen bekannt. Bei den bislang bekannten Kinderwagen ist das Fahrgestell mit zwei seitlichen Scheren ausgestattet, die die Möglichkeit bieten, daß insbesondere die Bauhöhe wesentlich reduziert werden kann, um den Kinderwagen bei Nichtgebrauch platzsparend zu transportieren. Mit diesen beiden Scherengestellen sind zwei quer dazu verlaufende Radachsen gekoppelt, auf deren Endbereiche die Laufräder gelagert sind. Die Verriegelung der Scherengestelle im Benutzungszustand des Kinderwagens erfolgt mittels einer Verriegelung, die dem Schiebebügel zugeordnet ist. Die Fußstütze ist um eine horizontale Achse schwenkbar und der Neigungswinkel kann mittels eines schwenkbaren Bügels eingestellt werden.

Die Scherenarme der Scherengestelle sowie gegebenenfalls auch schwenkbare Bügel sind bei den bislang bekannten Kinderwagen durch Nietverbindungen hergestellt, die äußerst aufwendig sind. Diese Kinderwagen haben sich in der Praxis durchaus bewährt. Auch im zusammengeklappten Zustand ist der Platzbedarf noch relativ groß. Im allgemeinen wird dies jedoch von den Käufern nicht bemängelt. Es sind jedoch auch Kraftfahrzeuge im Einsatz, die mit einem Kofferraum ausgestattet sind, dessen Volumen relativ klein ist. Solche Kraftfahrzeuge sind beispielsweise sogenannte Sportwagen.

Der Erfindung liegt die Aufgabe zugrunde, einen Kinderwagen der eingangs näher beschriebenen Art so zu gestalten, daß er zum Leertransport platzsparend zusammengelegt werden kann, und daß insbesondere auch auf die aufwendigen Nietverbindungen verzichtet werden kann.

Die gestellte Aufgabe wird gelöst, indem zumindest die Rückenlehne des Kinderwagens mittels eines Stelltriebes schwenkbar ist, der ein drehbares Antriebselement aufweist. In einer bevorzugten Ausführung ist jedoch vorgesehen, daß die Rückenlehne und die. Fußstütze jeweils mittels eines Stelltriebes schwenkbar sind und jeder Stelltrieb ein drehbares Antriebselement aufweist. Die Stelltriebe sind vorzugsweise baugleich gestaltet. Als Antriebselement kommt beispielsweise ein Handrad in Frage. Durch die Stelltriebe ist es nunmehr möglich, daß der Schwenkbereich der Rückenlehne und gegebenenfalls auch der Fußstütze derart groß sind, daß sie nicht nur in die für das einliegende oder einsitzende Kind optimale Stellung geschwenkt werden können, sondern daß sie bei Nichtgebrauch an die Form des zusammengelegten Kinderwagens angepaßt werden können, so daß sie zur Verringerung des Platzbedarfes beitragen. Durch den Stelltrieb bzw. durch die Stelltriebe ist die Handhabung äußerst einfach, da lediglich das Antriebselement, vorzugsweise das Handrad gedreht werden muß. Durch die Stelltriebe ist es möglich, daß beispielsweise die Rückenlehne von der normalen Schrägstellung in eine entgegengesetzte, d. h., nach unten und hängende Stellung geschwenkt werden kann. Eine konstruktiv einfache und funktionssichere Lösung für jeden Stelltrieb wird erreicht, indem jeder Stelltrieb wenigstens zwei sich über die Breite oder annähernd über die Breite der Rückenlehne bzw. der Fußstütze erstreckende, achsparallele Stäbe aufweist, daß auf ein Ende eines Stabes das Antriebselement aufgesetzt ist und daß die Stäbe über miteinander in Eingriff stehende Ritzel gekoppelt sind, wobei das abtriebsseitige Ritzel bzw. die abtriebsseitigen Ritzel mit einem an der Rückenlehne bzw. an der Fußstütze festgelegten Zahnsegment in Eingriff stehen. Der mit dem Antriebselement ausgestattete Stab bildet demzufolge das Eingangsglied oder Antriebsglied des Stelltriebes. Der dazu parallel verlaufende Stab könnte als Übertragungsstab gewertet werden, wobei auf einem Ende oder auf beiden Enden jeweils ein Ritzel aufgesetzt werden kann, welches mit entsprechenden Zahnsegmenten in Eingriff steht. Die auf diesen Stab aufgesetzten Ritzel bzw. das auf diesem Stab aufgesetzte Ritzel ist demzufolge das Abtriebsglied. Entgegen dieser Ausführung ist es jedoch auch denkbar, daß jeder Stelltrieb nur einen sich über die Breite der Rückenlehne bzw. der Fußstütze erstreckenden Antriebsstab aufweist, wobei auf ein Ende das Antriebselement drehfest aufgesetzt ist und daß zumindest im mittleren Bereich ein Ritzel festgesetzt ist. Dieses Ritzel steht wiederum mit einem Zahnsegment in Eingriff. Sofern jeder Stelltrieb mit zwei Stäben ausgestattet ist, ist es vorteilhaft, wenn die miteinander in Eingriff stehenden Ritzel, die beiden Stäbe aufgesetzt sind, zur Erhöhung der Verstellgeschwindigkeit der Rückenlehne und gegebenenfalls auch der Fußstütze eine Getriebestufe bilden, d. h., die Zähnezahl des auf die mit dem Antriebselement verdrehbaren Ritzels ist größer als die des damit in Eingriff stehenden Ritzels. Für die optimale Einstellung der Rückenlehne bzw. der Fußstütze bei einem einsitzenden oder einliegenden Kind ist die Getriebestufe nicht von Bedeutung, sondern die höhere Verstellgeschwindigkeit ist vorteilhaft, wenn der Kinderwagen in die zusammengeschobene Stellung gebracht werden soll.

Beim Gebrauch des Kinderwagens richtet sich die Stellung der Rückenlehne danach, ob das Kind schläft oder wach ist. Beim schlafenden Kind wird die Rückenlehne in eine relativ flache Stellung geschwenkt, d. h., der zur horizontalen eingeschlossene Winkel ist deutlich kleiner, als wenn das Kind wach ist. Damit das Kind gegen ein Herausfallen aus dem Kinderwagen bei der Stellung der Rückenlehne für das schlafende Kind gesichert ist, ist vorgesehen, daß zumindest der der Fußstütze abgewandt liegende Randbereich mit einem Schutzelement versehen ist. Dieses Schutzelement bildet einen erhöhten umlaufenden Rand, der jedoch stören würde, wenn die Rückenlehne in eine aufrecht stehende Position geschwenkt wird, wenn das Kind wach ist. Es ist deshalb vorgesehen, daß das Schutzelement mittels einer Aufstellmechanik bei Erreichen eines vorgegebenen Winkels in die Funktionsstellung schwenkbar ist. Dazu ist es zweckmäßig, wenn das Schutzelement einen an der Rückenlehne um eine ortsfeste Achse schwenkbar gelagerten Bügel aufweist und dieser Bügel mittels eines Schiebers verschwenkbar ist. Die Aufstellmechanik ist so ausgelegt, daß die Rückenlehne selbst als Antriebselement wirkt, indem beim Unterschreiten eines bestimmten Schrägungswinkels der Bügel entgegen der Bewegung der Rückenlehne geschwenkt wird. An den Bügel und an der Rückenlehne ist noch ein Tuch oder ein Netz befestigt, so daß das Schutzelement in sich geschlossen ist.

Während der Zeit, in der ein Kind mittels des in Rede stehenden Kinderwagens gefahren wird, wächst es erheblich. Damit mittels der Fußstütze nicht nur die Beine abgestützt werden, ist vorgesehen, daß die Fußstütze mit einem verstellbaren Stützwinkel ausgestattet ist. Der Abstand dieses Stützwinkels zum freien Rand der Fußstütze läßt sich je nach Größe des Kindes einstellen, so daß sich das Kind mit den Füßen an dem Stützwinkel abstützen kann. Die Änderung der Abstände zum freien Rand der Fußstütze könnte in relativ kleinen Schritten erfolgen, beispielsweise durch eine Rasterung, die so ausgelegt ist, daß zum Verstellen keine Werkzeuge oder irgendwelche mechanischen Elemente notwendig sind.

Um den Kinderwagen bequem schieben und gegebenenfalls auch ziehen zu können, ist vorgesehen, daß die freien Enden des Schiebebügels in einem an Seitenteilen des Kinderwagens drehbar gelagerten Drehteller eingreifen und daß der Schiebebügel in verschiedenen Winkelstellungen in Rastelemente eingreift. Der Schiebebügel läßt sich dann auf die Größe der den Kinderwagen schiebenden Person optimal einstellen. Die Seitenteile sind im Gegensatz zu den bislang bekannten Scherengestellen plattenförmig und in ihrer Form unveränderbar. Die Drehteller sind in entsprechenden kreisrunden Ausnehmungen formschlüssig geführt. Den Drehtellern sind beispielsweise Rastbohrungen funktionell zugeordnet, in die in Längsrichtung des Schiebebügels verstellbare Zapfen eingreifen. Zur Verstellung des Schiebebügels werden diese Zapfen außereingriff mit den Bohrungen gebracht. Entgegen den bislang bekannten Ausführungen ist der Schiebebügel nicht nur schwenkbar sondern auch in seiner Längsrichtung gegenüber den Drehtellern verschiebbar. In bevorzugter Ausführung ist vorgesehen, daß er in Längsrichtung verschiebbar ist, wenn er zuvor in eine senkrecht zum Fußboden oder annähernd senkrecht zum Fußboden stehende Lage gebracht wurde. Er kann dann so weit verschoben werden, daß die freien Enden auf Höhe der Laufräder stehen.

Das Sitz- oder Liegeteil, an dem die Rückenlehne und die Fußstütze gelagert sind, ist ein in sich starres Gebilde. Da auf die Scherengestelle verzichtet wird, ist in weiterer Ausgestaltung vorgesehen, daß die Laufräder an Einzelarmen gelagert sind, wobei die Einzelarme mittels Gelenke an dem Sitz- und Liegeeinsatz angeordnet sind. Es entfallen nunmehr die Radachsen. Die Einzelarme sind mittels der Gelenke so angeordnet, daß die vorderen und hinteren Laufräder im Betriebszustand des Kinderwagens in einem ausreichend großen Abstand zueinander stehen. Um den Kinderwagen platzsparend transportieren zu können, werden die vorderen und hinteren Einzelarme gegenläufig aufeinander zubewegt, so daß die Länge des Kinderwagens wesentlich reduziert wird. Die vorderen und hinteren Laufräder berühren sich in dieser Stellung. Da auch die Fußstütze und die Rückenlehne in eine hängende Lage geschwenkt werden können, entsteht nunmehr ein äußerst kompaktes Paket für den Leertransport des Kinderwagens. Die Einzelarme sind in bevorzugter Ausführung über ein Sicherungsgestänge miteinander derart gekoppelt, daß die Hebel zur Sicherung der Stellung der Laufräder über eine Totpunkt hinweg stehen. Dabei könnte diese Stellung noch zusätzlich durch Federn gesichert werden. Zum Zusammenfahren der Einzelarme bzw. der daran gelagerten Laufräder ist vorgesehen, daß das Sicherungsgestänge mittels eines Hebels über den Totpunkt hinweg in der entgegengesetzten Richtung bewegbar ist, und daß die Hebel des Sicherungsgestänges derart federbelastet sind, daß nach Überwinden des Totpunktes die Laufräder bzw. die Einzelarme aufeinander zubewegt werden. Dadurch wird die Handhabung zum Zusammenfahren des Kinderwagenfahrgestells leichter. In weiterer Ausgestaltung ist noch vorgesehen, daß jeder Einzelarm aus mindestens zwei Profilstäben derart gebildet ist, daß beim Schwenken der Einzelarme die Radachse parallel oder annähernd parallel zum Boden steht. Es ist ferner noch vorgesehen, daß die Laufräder an den Einzelarmen mittels Gelenke gelagert sind, und daß vorzugsweise an jedem Einzelarm die Laufräder paarweise angeordnet sind. Damit der Kinderwagen bequem in einer Kurve gefahren werden kann, ist vorgesehen, daß zumindest die vorderen, dem Schiebebügel abgewandt liegenden Laufräder als Lenkrollen ausgebildet sind.

Anhand der beiliegenden Zeichnungen wird die Erfindung noch näher erläutert. Es zeigen:
- Figur 1: ein Ausführungsbeispiel des erfindungsgemäßen Kinderwagens in einer Seitenansicht, den Fahrzustand zeigend,
- Figur 2: den Kinderwagen nach der Figur 1 in einer Zwischenstellung,
- Figur 3: den Kinderwagen nach der Figur 1 im zusammengefahrenen Zustand,
- Figur 4: die Rückenlehne des Kinderwagens zeigend und
- Figur 5: den Kinderwagen in der Fahrstellung zeigend, jedoch in einer Ansicht von unten.

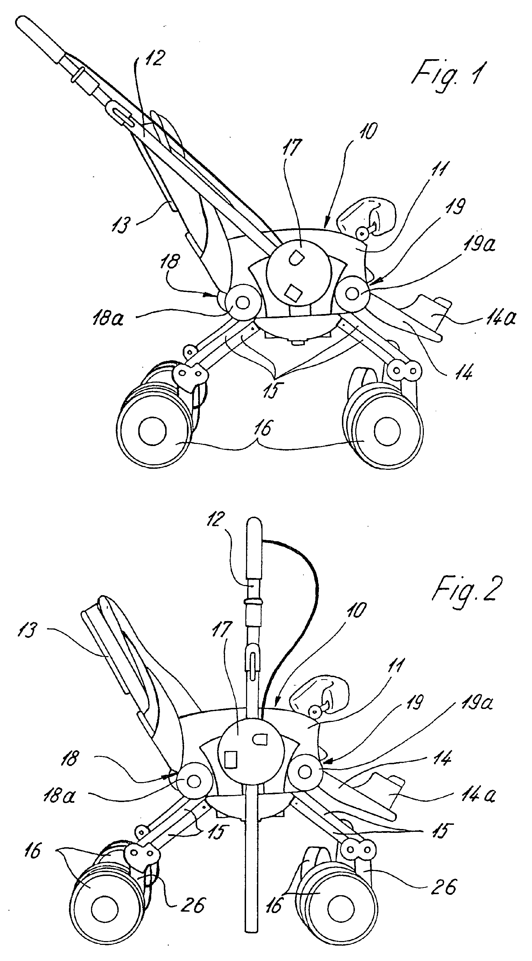

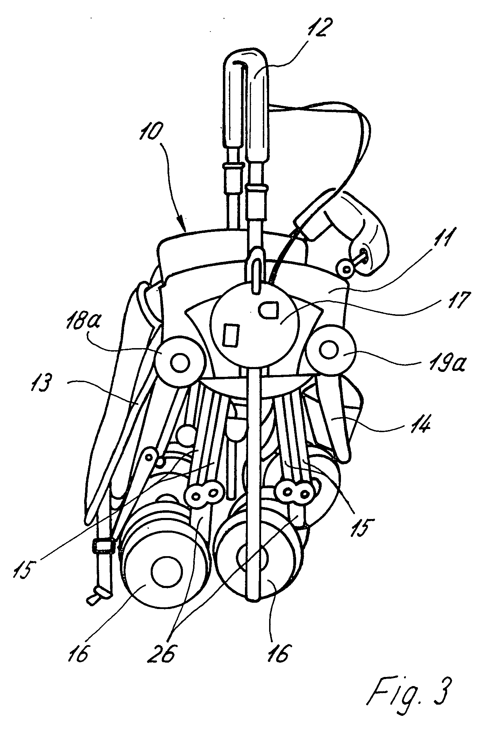

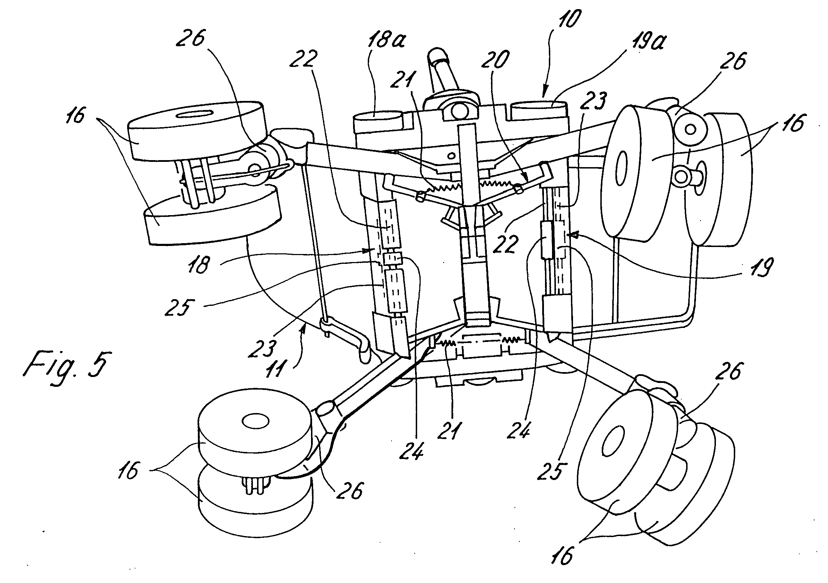

Der in der Figur 1 dargestellte Kinderwagen 10 besteht aus einem ein starres Formteil bildenden Sitz- und Liegeeinsatz 11, einem Schiebebügel 12, einer Rückenlehne 13, einer Fußstütze 14 und einem Fahrgestell, welches aus vier Einzelarmen bzw. Stützen und an den freien Enden der Einzelarmen gelagerten Laufrädern 16 besteht. An den beiden Seitenteilen des Sitz- und Liegeeinsatzes sind an den äußeren Seiten Drehteller 17 drehbar geführt. Dazu sind die Seitenteile mit entsprechenden Ausnehmungen versehen. Die beiden parallelen Holme des Schiebebügels 12 greifen in entsprechende Bohrungen der Drehteller 17 ein. In den freien Endbereichen der parallelen Holme sind in Längsrichtung der Holme verfahrbare Arretierstifte gelagert. Diese Arretierstifte greifen in Bohrungen ein, die in den Seitenteilen des Sitz- und Liegeeinsatzes 11 angrenzend an die Drehteller 17 vorgesehen sind. Der Schiebebügel 12 läßt sich demzufolge in verschiedenen Winkelstellungen festsetzen. Die Drehteller 17 und die Seitenteile sind außerdem so gestaltet, daß die parallelen Holme des Schiebebügels 12 entsprechend der Figur 2 bis auf den Fußboden geschoben werden können, um den Kinderwagen 10 zusammenzufahren. Die Rückenlehne 13 läßt sich über einen noch näher erläuterten Stelltrieb 18 schwenken. Der Stelltrieb 18 ist dazu mit einem Antriebselement 18a ausgestattet, welches im dargestellten Ausführungsbeispiel ein Handrad ist. Die Fußstütze 14 läßt sich über einen weiteren, vorzugsweise baugleich gestalteten Stelltrieb 19 verstellen, wobei auch dieser Stelltrieb mit einem Antriebselement 19a in Form eines Handrades ausgestattet ist. Anstelle der Handräder 18a, 19a könnte der Stelltrieb auch mit einem elektromotorischen Antrieb ausgestattet sein. Wie die Figur 1 zeigt, besteht jeder Einzelarm 15 bzw. jede Stütze aus zwei Rohren, die durch einen Mittelsteg miteinander verbunden sind. Die Laufräder 16 sind paarweise an den freien Enden der vier Einzelarme 15 angebracht. Zumindest die vorderen, dem Schiebebügel 12 abgewandt liegenden Laufräder 16 sind als Lenkrollen ausgebildet, um das Kurvenfahren mit dem Kinderwagen 10 zu erleichtern. Um den Kinderwagen 10 entsprechend der Figur 3 zusammenzufahren, wird zunächst der Schiebebügel 12 in die in der Figur 2 dargestellte Stellung geschoben. Die vorderen und hinteren Laufräder 16 berühren sich oder liegen in einem geringen Abstand zueinander. Anschließend können mittels der Stelltriebe 18, 19 die Rückenlehne 13 und die Fußstütze 14 abgesenkt werden, so daß sie angrenzend an die Einzelarme 15 stehen. Es wird dann ein platzsparendes Paket gebildet, wie die Figur 3 zeigt. Wie Figur 5 zeigt, sind die dem Sitz- und Liegeeinsatz 11 zugeordneten Enden der Einzelarme 15 der linken und rechten Seite jeweils über ein Sicherungsgestänge 20 miteinander gekoppelt. Jedes Sicherungsgestänge 20 besteht im wesentlichen aus gelenkig miteinander verbundenen Hebeln. Kinematisch ist jedes Sicherungsgestänge 20 so ausgelegt, daß in der in der Figur 5 dargestellten Fahrstellung die Hebel sinngemäß über den Totpunkt gezogen werden, so daß die Stellung der Einzelarme 15 in der in der Figur 1 dargestellten Fahrstellung gesichert ist. Zum Zusammenfahren der Einzelarme 15 wird das Sicherungsgestänge 20 mittels eines nicht näher dargestellten Hebels so geschwenkt bzw. die Hebel des Sicherungsgestänges 20 werden so geschwenkt, daß der Totpunkt überwunden wird. Durch Zugfedern 21 werden anschließend die Einzelarme 15 aufeinander zubewegt, so daß das Zusammenfahren nach Überwinden des Totpunktes sinngemäß selbsttätig ohne manuelle Krafteinwirkung erfolgt. Über das Sicherungsgestänge 20 sind die vier Einzelarme 15 kinematisch miteinander gekoppelt. Dadurch werden sinngemäß die Laufräder 16 der linken und rechten Seite synchron bewegt, wenn das Kinderwagenfahrgestell zusammengefahren wird. Das Auseinanderfahren erfolgt in umgekehrter Richtung, wobei dazu dann eine manuelle Krafteinwirkung notwendig ist. In der Figur 5 sind außerdem die Stelltriebe 18 und 19 zu erkennen. Danach besteht jeder Stelltrieb 18, 19 aus zwei parallel und im Abstand zueinander verlaufenden Stäben oder Stangen 22, 23 die über zwei Ritzel 24, 25 miteinander gekoppelt sind. Auf die Stäbe 22 sind die beiden Antriebselemente 18, 19 drehfest aufgesetzt. Die Antriebselemente 18a, 19a stehen seitlich an einem Seitenteil des Sitz- und Liegeeinsatzes 11. Die beiden Ritzel 24, 25 bilden eine Getriebestufe, in der Form, daß die Verstellgeschwindigkeit der Rückenlehne 13 bzw. der Fußsttitze 14 erhöht wird. Dazu sind die Zähnezahlen der Ritzel 24 größer als die der Ritzel 25. Die Ritzel 24, 25 sind in der Mitte der Rückenlehne 13 und der Fußstütze 14 angeordnet. Entgegen der Darstellung könnten auch Ritzel in den Endbereichen auf die Stäbe 22, 23 aufgesetzt werden. Die Ritzel 25 stehen mit nicht mehr dargestellten Zahnsegmenten in Eingriff.

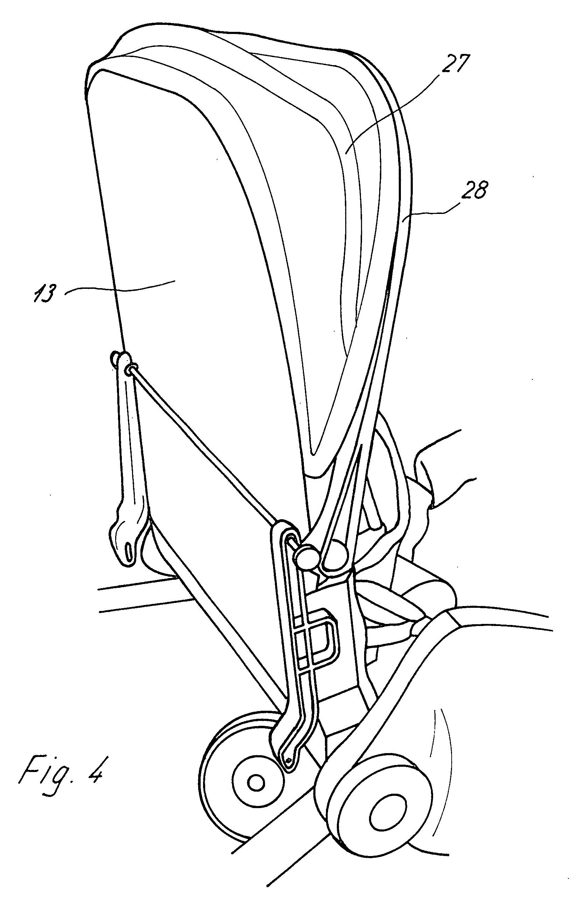

Die Laufräder 16 sind beispielsweise paarweise an den freien Enden der Einzelarme 15 angebracht. Dies erfolgt über Gelenke 26. Die Figur 4 zeigt, daß die Rückenlehne 13 von einem Schutzelement 27 umgeben ist, welches sich selbsttätig aufrichtet. Dazu ist es um eine horizontale Achse schwenkbar gelagert und mit einem starren Bügel 28 ausgestattet. Das Schutzelement 27 enthält außerdem ein flexibles Netz, welches an der Rückenlehne 13 und am Bügel 28 festgelegt ist. Dadurch ist das im Sitz- und Liegeeinsatz 11 aufbewahrte Kind vor dem Herausfallen gesichert. Das Schutzelement 27 ist so ausgelegt, daß es sich bei einem bestimmten Neigungswinkel der Rückenlehne 13 selbsttätig aufrichtet. Dadurch kann ein optimaler Schutz für das Kind hergestellt werden, da versehentlich das Aufrichten nicht vergessen werden kann. Das Schutzelement 27 tritt insbesondere dann in Funktion, wenn die Rückenlehne 13 in eine Schlafposition gebracht wird. Wie die Figuren 1 und 2 zeigen, ist die Fußstütze 14 noch mit einem verstellbaren Stützwinkel 14a ausgestattet. Dieser Stützwinkel 14a wird auf die Größe des Kindes eingestellt, so daß es sich auch mit den Füßen abstützt.

Die Erfindung ist nicht auf das dargestellte Ausführungsbeispiel beschränkt. Wesentlich ist, daß die Rückenlehne 13 und die Fußstütze 14 über die Stelltriebe 18, 19 über einen äußerst großen Verstellbereich stufenlos verstellbar sind, so daß sie im zusammengeschobenen Zustand des aus den Einzelarmen 15 und den Laufrädern 16 gebildeten Fahrgestell derart geschwenkt werden können, daß sie angrenzend an den Einzelarmen 15 stehen. Ferner ist wesentlich, daß zur Vermeidung von Nietverbindungen das Fahrgestell die Einzelarme 15 aufweist.

## Patentansprüche

1. Kinderwagen, mit einem die Laufräder aufweisenden Fahrgestell, einem Schiebebügel, einer einstellbaren Fußstütze sowie einer Rückenlehne, **dadurch gekennzeichnet, daß** zumindest die Rückenlehne (13) mittels eines Stelltriebes (18) schwenkbar ist, der ein drehbares Antriebselement (18a) aufweist.

2. Kinderwagen nach Anspruch 1, **dadurch gekennzeichnet, daß** die Rückenlehne (13) und die Fußstütze (14) jeweils mittels eines Stelltriebes (18, 19) schwenkbar sind und jeder Stelltrieb (18, 19) ein drehbares Antriebselement (18a, 19a) aufweist.

3. Kinderwagen nach Anspruch 1 oder 2, **dadurch gekennzeichnet, daß** das Antriebselement (18a, 19a) ein von Hand drehbares Handrad ist.

4. Kinderwagen nach einem oder mehreren der vorhergehenden Ansprüche, **dadurch gekennzeichnet, daß** jeder Stelltrieb (18, 19) wenigstens einen sich über die Breite der Rückenlehne (13) und gegebenenfalls der Fußstütze (14) sich erstreckenden Stab (22) aufweist, auf dessen eines Ende das Antriebselement (18 bzw. 19) drehfest aufgesetzt, und daß auf diesen Stab (18) vorzugsweise im mittleren Bereich ein Ritzel (24) aufgesetzt ist.

5. Kinderwagen nach Anspruch 4, **dadurch gekennzeichnet, daß** jeder Stelltrieb (18, 19) wenigstens zwei sich über die Breite oder annähernd über die Breite der Rückenlehne (13) und gegebenenfalls der Fußstütze (14) erstreckende, achsparallele Stäbe (22, 23) aufweist, daß auf ein Ende Stabes (22) das Antriebselement (18, 19) aufgesetzt ist, und daß die Stäbe über miteinander in Eingriff stehende Ritzel (24, 25) miteinander gekoppelt, und daß jedes abtriebsseitige Ritzel (25) mit einem an der Rückenlehne (13) und gegebenenfalls an der Fußstütze (14) festgelegten Zahnsegment in Eingriff steht.

6. Kinderwagen nach Anspruch 5, **dadurch gekennzeichnet, daß** die Ritzel (24, 25) zur Erhöhung der Verstellgeschwindigkeit der Rückenlehne (13) bzw. der Fußstütze (14) eine Getriebestufe bilden.

7. Kinderwagen nach einem oder mehreren der vorhergehenden Ansprüche 1 bis 6, **dadurch gekennzeichnet, daß** zumindest der der Fußstütze (14) abgewandt liegende Randbereich der Rückenlehne (13) mit einem Schutzelement (27) versehen ist.

8. Kinderwagen nach Anspruch 7, **dadurch gekennzeichnet, daß** das Schutzelement (27) mittels einer Aufstellmechanik bei Erreichen eines vorgegebenen Winkels aufstellbar ist.

9. Kinderwagen nach Anspruch 7 oder 8, **dadurch gekennzeichnet, daß** das Schutzelement (27) einen an der Rückenlehne (13) um eine ortsfeste Achse schwenkbar gelagerten Bügel (28) aufweist, und daß der Bügel (28) mittels eines Schiebers aufrichtbar ist.

10. Kinderwagen nach Anspruch 9, **dadurch gekennzeichnet, daß** das Schutzelement (27) ein flexibles Netz aufweist, welches an dem Bügel (28) und an der Rückenlehne (13) festgelegt ist.

11. Kinderwagen nach einem oder mehreren der vorhergehenden Ansprüche 1 bis 10, **dadurch gekennzeichnet, daß** die Fußstütze (14) mit einem verstellbaren Stützwinkel (14a) ausgestattet ist.

12. Kinderwagen nach einem oder mehreren der vorhergehenden Ansprüche 1 bis 11, **dadurch gekennzeichnet, daß** die freien Enden der parallelen Holme des Schiebebügels (12) in einem an Seitenteilen des Sitz- und Liegeeinsatzes (11) drehbar gelagerten Drehteller (17) eingreifen und daß der Schiebebügel (12) in verschiedenen Winkelstellungen gegenüber dem Sitz- und Liegeeinsatz (11) arretierbar ist.

13. Kinderwagen nach Anspruch 12, **dadurch gekennzeichnet, daß** die Seitenteile des Sitz- und Liegeeinsatzes (11) plattenförmig ausgebildet sind, und daß die Drehteller (17) formschlüssig in Ausnehmungen geführt sind.

14. Kinderwagen nach einem oder mehreren der vorhergehenden Ansprüche 1 bis 13, **dadurch gekennzeichnet, daß** die Laufräder (16) an Einzelarmen (15) gelagert sind, und daß die Einzelarme mittels Gelenke am Sitz- und Liegeeinsatz (11) festgelegt sind.

15. Kinderwagen nach Anspruch 14, **dadurch gekennzeichnet, daß** die Einzelarme (15) über ein Sicherungsgestänge (20) derart miteinander gekoppelt sind, daß die das Sicherungsgestänge (20) bildenden Hebel zur Sicherung der Fahrstellung der Einzelarme (15) über einen Totpunkt hinweg geführt sind.

16. Kinderwagen nach Anspruch 15, **dadurch gekennzeichnet, daß** das Sicherungsgestänge (20) mittels eines Hebels zum Zusammenfahren der Einzelarme (15) über den Totpunkt hinweg bewegbar sind, und daß die Hebel des Sicherungsgestänges (20) durch Zugfedern (21) derart belastet sind, daß nach der Überwindung des Totpunktes die Einzelarme (15) selbsttätig aufeinander zu bewegbar sind.

17. Kinderwagen nach einem oder mehreren der vorhergehenden Ansprüche 1 bis 16, **dadurch gekennzeichnet, daß** jeder Einzelarm (15) aus mindestens zwei Profilstäben derart gebildet ist, daß beim Schwenken der Einzelarme (15) die Drehachsen der Laufräder (16) parallel oder annähernd parallel zum Boden stehen.

18. Kinderwagen nach einem oder mehreren der vorhergehenden Ansprüche 1 bis 17, **dadurch gekennzeichnet, daß** die Laufräder (16) mittels Gelenke (26) an den Einzelarmen (15) gelagert, vorzugsweise paarweise gelagert sind.

19. Kinderwagen nach einem oder mehreren der vorhergehenden Ansprüche 1 bis 18, **dadurch gekennzeichnet, daß** zumindest die vorderen, dem Schiebebügel (12) abgewandt liegenden Laufräder (16) als Lenkrollen ausgebildet bzw. um vertikale Achsen schwenkbar sind.
